# DEMANDE DE BREVET EUROPEEN

(11) **EP 0 986 157 A1**
(43) Date de publication de la demande: **15.03.2000**
(21) Numéro de dépôt: 99402189.7
(22) Date de dépôt: 06.09.1999
(51) Int. Cl.: H02G 3/12

(54) **Appareillage électrique comportant un contenant allongé dans lequel sont implantés des éléments électriques**

(30) Priorité: 07.09.1998 FR 9811132
(71) Demandeur: PROFESSIONAL GENERAL ELECTRONIC PRODUCTS P.G.E.P., 92400 Courbevoie (FR)
(72) Inventeur: Blanchot, Michèle, F-78270 Cravent (FR); Gagliardi, Amédée, F-78270 Cravent (FR)
(74) Mandataire: Loyer, Bertrand

(57) **Abrégé**

La face avant (22) dudit contenant (2) présente une ouverture longitudinale (21) destinée à permettre l'implantation des éléments électriques (1).

Suivant l'invention, la dimension transversale de ladite ouverture (21) est supérieure à celle des éléments électriques (1), et lesdits éléments électriques (1) sont positionnés et rendus solidaires du contenant allongé (2) après la mise en place d'un moyen intermédiaire (4) constitué d'au moins une baguette (4) présentant d'une part des premiers moyens d'accrochage (43) permettant sa solidarisation au contenant allongé (2) et d'autre part des seconds moyens d'accrochage (44) permettant sa solidarisation aux éléments électriques (1).

## Description

La présente invention concerne d'une manière générale des appareillages électriques et plus particulièrement des appareillages comportant un contenant allongé, tel qu'un poteau ou un rail, dans lequel sont disposés des éléments électriques, tels que des socles de prise de courant, interrupteurs, voyants, disjoncteurs, etc., lesdits éléments étant choisis en fonction des besoins recensés à proximité du lieu d'implantation dudit contenant allongé.

De tels appareillages sont couramment utilisés, spécialement dans des locaux professionnels, tels que des bureaux ou des laboratoires.

De manière à laisser le passage pour l'implantation des éléments électriques, la face avant du contenant allongé de ces appareillages présente une ouverture longitudinale de largeur égale, aux jeux nécessaires près, à la largeur des éléments électriques. Une fois que les éléments électriques ont été mis en place dans le contenant, leur face avant s'étend dans le plan de la face avant dudit contenant ou un peu en avant de celle-ci.

Les bords de l'ouverture formée dans la face avant du contenant sont conformés de manière à permettre le maintien des éléments électriques par la coopération de moyens complémentaires d'accrochage. De manière connue en soi, lesdits éléments électriques sont soit enfilés dans le contenant à une extrémité de celui-ci et mis en place par coulissement dans la direction axiale, soit insérés suivant une direction perpendiculaire à la face avant du contenant et maintenus par des moyens d'encliquetage.

A l'heure actuelle, chaque appareillage est uniquement destiné à être utilisé avec un ensemble prédéterminé d'éléments électriques ce qui réduit considérablement les possibilités d'utilisation de ceux-ci.

La présente invention tend à proposer un appareillage tel qu'il soit possible d'y positionner des éléments électriques d'origines variées, donc présentant des dimensions et des moyens d'accrochage différents, de manière à pouvoir répondre à toutes nécessités sur le lieu d'implantation.

A cet effet, l'invention propose un appareillage électrique comportant un contenant allongé, tel qu'un rail ou un poteau, dont la face avant présente une ouverture longitudinale destinée à permettre l'implantation d'éléments électriques dans ledit contenant, caractérisé en ce que la dimension transversale de ladite ouverture est supérieure à celle des éléments électriques, et en ce que lesdits éléments électriques sont positionnés et rendus solidaires du contenant allongé après la mise en place d'un moyen intermédiaire constitué par au moins une baguette présentant d'une part des premiers moyens d'accrochage permettant sa solidarisation au contenant allongé et d'autre part des seconds moyens d'accrochage permettant sa solidarisation aux éléments électriques.

L'appareillage selon l'invention est encore remarquable en ce que :
- la baguette est globalement constituée par un flanc portant les premiers moyens d'accrochage sur sa face destinée à être en regard de la paroi latérale du contenant allongé et les second moyens d'accrochage sur son autre face destinée à être tournée vers l'ouverture dudit contenant,
- le contenant porte des moyens d'accrochage se composant d'une paroi longitudinale interne, disposée parallèlement au bord de l'ouverture et d'un rebord positionné dans l'angle interne du contenant disposé le long de la face avant de celui-ci,
- l'extrémité supérieure de la paroi longitudinale s'étend en retrait du plan de la face avant du contenant,
- les premiers moyens d'accrochage portés par la baguette comportent une face supérieure plane et une nervure disposée à distance de ladite face supérieure plane, la distance séparant le dessous de la face supérieure plane du dessus de la nervure étant égale à la hauteur de la paroi longitudinale interne du contenant,
- les premiers moyens d'accrochage comportent une patte arquée dont l'extrémité est destinée à être positionnée derrière le rebord du contenant,
- les seconds moyens d'accrochage portés par la baguette se composent d'une paroi horizontale solidaire du flanc en lui étant perpendiculaire et d'un retour vertical solidaire de l'extrémité de ladite paroi horizontale et parallèle au flanc,
- il comporte également un couvercle destiné à fermer l'ouverture du contenant dans les portions de celui-ci ne recevant pas d'élément électrique, ledit couvercle présentant une face plane bordée par des pattes élastiques destinées à coopérer avec les moyens d'accrochage du contenant.

L'invention sera mieux comprise grâce à la description qui va suivre donnée à titre d'exemple non limitatif en référence aux dessins annexés dans lesquels :
- la figure 1 est une vue en perspective d'un exemple de réalisation d'un élément électrique susceptible d'être mis en place dans un appareillage selon l'invention,
- la figure 2 représente les différents éléments mis en oeuvre dans l'appareillage selon l'invention, les figures 2a à 2c montrant ces éléments en coupe,
- la figure 3 est une vue en coupe d'un appareil selon l'invention dans lequel un élément électrique est monté après la mise en place de baguettes.

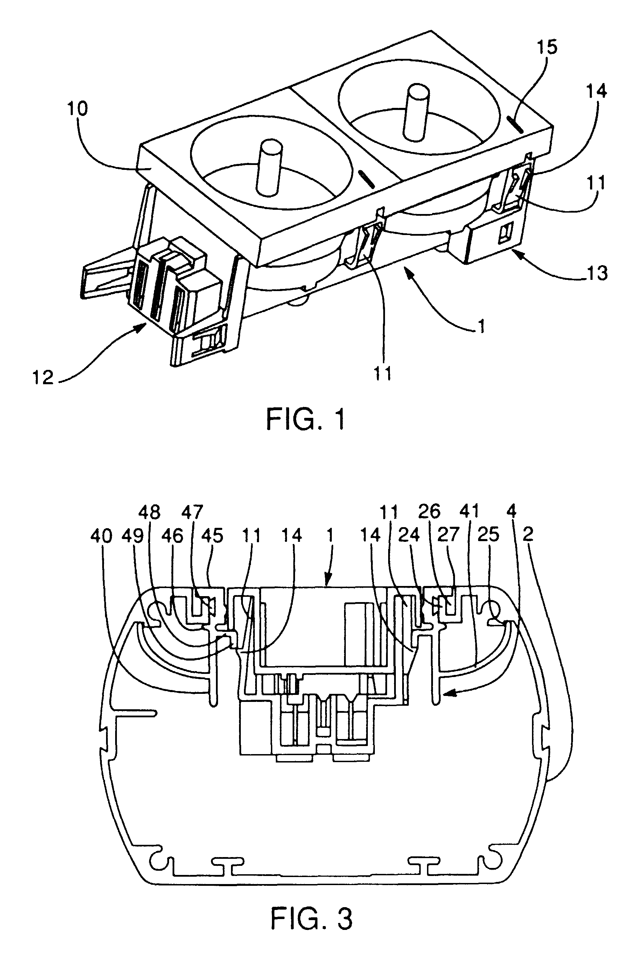

L'élément électrique 1 représenté à la figure 1 est un élément connu destiné à être mis en place dans un contenant allongé tel qu'un rail ou un poteau, d'un appareillage électrique. Cet élément 1 comporte une face avant 10 destinée à être positionnée dans l'ouverture longitudinale du contenant. Des languettes 11 sont adaptées à maintenir l'élément 1 dans le contenant en étant rabattues sous la paroi dudit contenant bordant l'ouverture dans laquelle est inséré ledit élément électrique 1, ces languettes 11 peuvent être rapprochées du corps de l'élément électrique 1 en insérant un outil dans les ouvertures 15 de manière à permettre le retrait dudit élément 1 du contenant. L'élément représenté à la figure 1 porte à ses extrémités longitudinales des moyens 12 et 13 de raccordement électrique et de fixation mécanique aux éléments voisins.

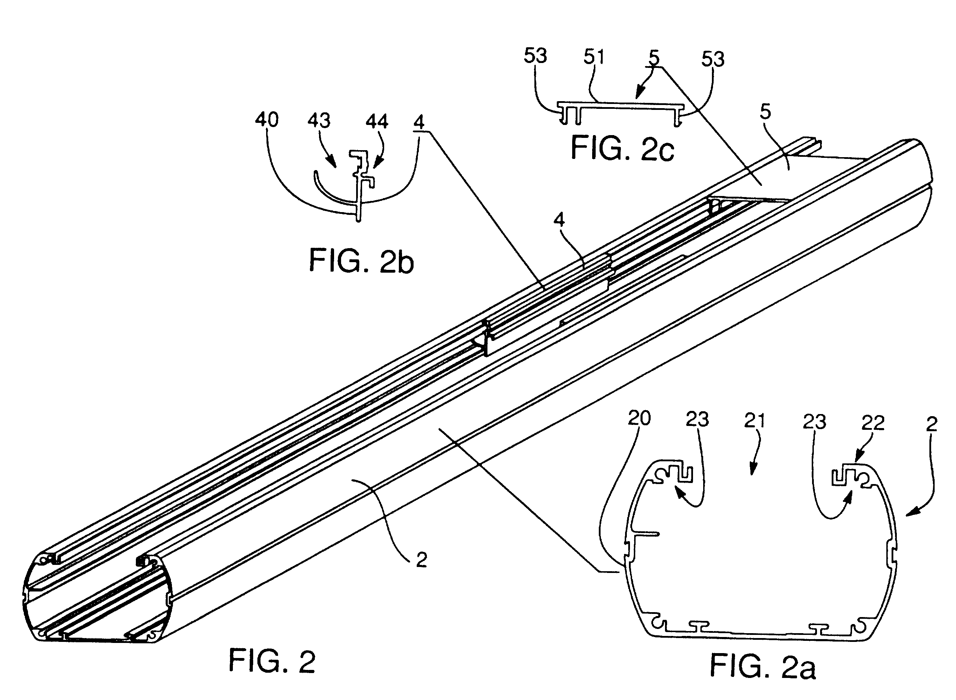

Comme représenté à la figure 2, l'appareillage électrique selon l'invention comporte un contenant allongé 2 constitué par un profilé pouvant être métallique, par exemple en aluminium, ou en matière plastique. Ce profilé 2 est globalement parallélépipèdique, les parois latérales 20 dudit profilé sont arrondies dans l'exemple représenté au dessin, pour améliorer l'esthétique dudit profilé 2.

La face avant, la face supérieure 22 dans la position du contenant représentée au dessin, présente une ouverture longitudinale 21 qui s'étend sur toute la longueur du profilé 2 et pratiquement sur toute la largeur de ladite face 22.

Des moyens d'accrochage 23 sont prévus de chaque côté de l'ouverture 21, ces moyens d'accrochage 23 étant constitués par un profilage des bords de ladite ouverture 21 faite dans la face 22.

L'appareillage selon l'invention comporte également des moyens intermédiaires constitués par des baguettes 4 dont la mise en oeuvre sera décrite plus loin.

Les baguettes 4 portent des premiers moyens d'accrochage 43 complémentaires des moyens 23 du contenant 2 et des seconds moyens d'accrochage 44 destinés à assurer le maintien d'un élément électrique 1.

Il est également prévu un couvercle 5 destiné à fermer l'ouverture 21 du contenant 2 dans les parties où il n'y a pas d'élément électrique 1. Ce couvercle présente une face plane 51 bordée par des pattes élastiques 53 destinées à coopérer avec les moyens d'accrochage 23 du contenant.

Comme visible à la figure 3, la dimension transversale de l'ouverture longitudinale 21 est supérieure à celle de l'élément électrique 1 de manière à laisser la place au moyen intermédiaire d'accrochage constitué par deux baguettes 4 disposées de part et d'autre de l'élément électrique 1.

Les moyens d'accrochage 23 portés par le contenant 2 se composent, dans l'exemple de réalisation représenté au dessin, d'une paroi 24 longitudinale interne, disposée dans l'ouverture, parallèlement au bord de celle-ci et d'un rebord 25 positionné dans l'angle interne du contenant 2 disposé le long de la face avant 22 de celui-ci. L'extrémité supérieure de la paroi 24 s'étendant en retrait du plan de la face avant 22 du contenant 2.

Comme représenté au dessin, la paroi longitudinale 24 du contenant est de préférence écartée du bord externe de l'ouverture 21 en étant constituée par la face externe d'un pli en forme de U réalisé le long de l'ouverture 21 et définissant une rainure 26 le long de ladite ouverture 21. Ladite rainure 26 est destinée à permettre l'insertion d'un outil allongé tel qu'un tournevis pour permettre l'extraction des éléments électriques lorsque ceux-ci sont disposés dans le contenant sans moyen intermédiaire.

La figure 3 montre un appareillage électrique selon l'invention dans lequel l'élément électrique est monté dans le contenant allongé au moyen de deux baguettes 4.

Chaque baguette 4 est globalement constituée par un flanc profilé 40 portant les premiers moyens d'accrochage 43 sur une de ses faces et les seconds moyens d'accrochage 44 sur son autre face.

La face du flanc 40 destinée à être disposée en regard d'une paroi latérale 20 du profilé 2 porte les premiers moyens d'accrochage. Ils sont constitués par une face supérieure plane 45 perpendiculaire au flanc 40 disposée sur un bord de celui-ci et par une nervure 46 prévue sur le flanc 40 à distance de ladite face supérieure plane 45. La distance séparant le dessous de la face supérieure plane 45 du dessus de la nervure 46 est égale à la hauteur de la paroi longitudinale interne 24 du contenant 2.

Les premiers moyens d'accrochage comporte également une patte arquée 41 dont l'extrémité est destinée à être positionnée derrière le rebord 25 du contenant 2 de manière à solidariser la baguette 4 au contenant 2.

Pour la mise en place des baguettes intermédiaires 4 dans le contenant 2, on positionne la face supérieure 45 sur la paroi 24 et on fait pivoter la baguette de manière à amener la nervure 46 sous la paroi 24 et l'extrémité de la patte arquée 41 derrière le rebord 25. L'extrémité supérieure de la paroi longitudinale 24 est disposée en retrait du plan de la face avant 22 du contenant 2 d'une distance telle que la face supérieure 45 de la baguette 4 soit dans le plan de ladite face avant 22 lorsqu'elle est en appui sur ladite paroi longitudinale 24.

L'élasticité du flanc 40 est améliorée par la prévision d'une gorge 47 disposée entre la face supérieure 45 et la nervure 46.

Suivant l'invention, chaque baguette 4 porte également des seconds moyens d'accrochage destinés à la solidarisation d'un élément électrique 1. Ces seconds moyens d'accrochage sont disposés sur la face du flanc 40 destinée à être tournée vers l'ouverture 21 du contenant.

Dans l'exemple de réalisation représenté au dessin, ces seconds moyens d'accrochage se composent d'une paroi horizontale 48 solidaire du flanc 40 en lui étant perpendiculaire, et d'un retour vertical 49 solidaire de l'extrémité de ladite paroi 48 et parallèle au flanc 40, ledit retour 49 s'étendant en direction du bord du flanc ne portant pas la face supérieure 45.

Lors de la mise en place de l'élément électrique 1, le bord tombant de sa face avant 10 vient en appui sur la paroi horizontale 48 tandis que l'ergot 14 de la languette élastique 11 se positionne sous le retour vertical 49. Sur la figure 3, la languette 11 située sur la droite est représentée en position de maintien de l'élément électrique 1 sur la baguette 4 tandis que la languette 11 située sur la gauche est représentée rabattue vers l'élément électrique 1 en vue de l'extraction dudit élément électrique 1.

Suivant une variante de réalisation non représentée aux dessins, l'élément électrique 1 peut être monté dans le contenant allongé 2 en mettant en oeuvre une seule baguette intermédiaire 4 qui sera positionnée le long d'un bord externe de l'élément électrique. Dans ce cas, le bord de l'ouverture 21 disposé du côté où l'on ne prévoit pas de baguette sera profilé de manière à permettre l'accrochage de l'élément électrique 1.

Il est également possible de prévoir des baguettes de largeurs différentes.

L'utilisation d'une seule baguette ou de baguettes de largeurs différentes permet de déporter l'élément électrique d'un côté ou de l'autre de l'axe du contenant allongé ce qui permet de faciliter le passage des câbles à l'intérieur et à l'extérieur du contenant, spécialement lorsque l'élément électrique nécessite des conducteurs particuliers.

Comme on peut le comprendre, il est possible de prévoir une gamme de moyens intermédiaires portant des seconds moyens d'accrochage différents les uns des autres, chacun étant adapté à permettre la mise en place et l'accrochage d'un type déterminé d'éléments électriques.

Lors de la mise en place d'une installation électrique à l'aide de l'appareillage selon l'invention, l'installateur peut avantageusement choisir, parmi les différentes marques à sa disposition, le modèle et le type d'élément électrique convenant le mieux à son besoin et placer les différents éléments dans le même contenant, rail ou poteau, en positionnant les moyens intermédiaires adaptés.

Il est également possible de remplacer aisément les différentes pièces utilisées pour le montage, que l'on remplace un ou des éléments électriques par des éléments de la même série ou par des éléments de séries différentes, donc ayant des dimensions et/ou moyens d'accrochage différents.

Bien entendu l'ouverture 21 de la face avant 22 du contenant 2 est prévue plus large que tous les types d'éléments électriques 1 disponibles sur le marché.

## Revendications

1. Appareillage électrique comportant un contenant allongé (2), tel qu'un rail ou un poteau, dont la face avant (22) présente une ouverture longitudinale (21) destinée à permettre l'implantation d'éléments électriques (1) dans ledit contenant (2), caractérisé en ce que la dimension transversale de ladite ouverture (21) est supérieure à celle des éléments électriques (1), et en ce que lesdits éléments électriques (1) sont positionnés et rendus solidaires du contenant allongé (2) après la mise en place d'un moyen intermédiaire (4) constitué par au moins une baguette (4) présentant d'une part des premiers moyens d'accrochage (43) permettant sa solidarisation au contenant allongé (2) et d'autre part des seconds moyens d'accrochage (44) permettant sa solidarisation aux éléments électriques (1).

2. Appareillage selon la revendication 1, caractérisé en ce que la baguette (4) est globalement constituée par un flanc (40) portant les premiers moyens d'accrochage (43) sur sa face destinée à être en regard de la paroi latérale du contenant allongé (2) et les second moyens d'accrochage (44) sur son autre face destinée à être tournée vers l'ouverture (21) dudit contenant (2).

3. Appareillage selon la revendication 1 ou selon la revendication 2, caractérisé en ce que le contenant (2) porte des moyens d'accrochage (23) se composant d'une paroi (24) longitudinale interne, disposée parallèlement au bord de l'ouverture et d'un rebord (25) positionné dans l'angle interne du contenant (2) disposé le long de la face avant (22).

4. Appareillage selon la revendication 3, caractérisé en ce que l'extrémité supérieure de la paroi longitudinale (24) s'étend en retrait du plan de la face avant (22) du contenant (2).

5. Appareillage électrique selon la revendication 3 ou selon la revendication 4, caractérisé en ce que les premiers moyens d'accrochage (43) portés par la baguette (4) comportent une face supérieure plane (45) et une nervure (46) disposée à distance de ladite face supérieure plane (45), la distance séparant le dessous de la face supérieure plane (45) du dessus de la nervure (46) étant égale à la hauteur de la paroi longitudinale interne (24) du contenant (2).

6. Appareillage électrique selon la revendication 7, caractérisé en ce que les premiers moyens d'accrochage (43) comportent une patte arquée (41) dont l'extrémité est destinée à être positionnée derrière le rebord (25) du contenant (2).

7. Appareillage selon l'une quelconque des revendications 2 à 6, caractérisé en ce que les seconds moyens d'accrochage (44) portés par la baguette (4) se composent d'une paroi horizontale (48) solidaire du flanc (40) en lui étant perpendiculaire, et d'un retour vertical (49) solidaire de l'extrémité de ladite paroi horizontale (48) et parallèle au flanc (40).

8. Appareillage selon l'une quelconque des revendications précédentes, caractérisé en ce qu'il comporte également un couvercle (5) destiné à fermer l'ouverture (21) du contenant (2) dans les portions de celui-ci ne recevant pas d'élément électrique (1), ledit couvercle présentant une face plane (51) bordée par des pattes élastiques (53) destinées à coopérer avec les moyens d'accrochage (23) du contenant (2).
